# EUROPÄISCHE PATENTSCHRIFT

(11) **EP 3 554 931 B1**
(45) Veröffentlichungstag und Bekanntmachung des Hinweises auf die Patenterteilung: **09.12.2020**
(21) Anmeldenummer: 17786844.5
(22) Anmeldetag: 02.10.2017
(51) Int. Cl.: B62J 29/00, B62K 21/26, B62K 15/00

(54) **LENKEINHEIT FÜR EIN FAHRZEUG UND FAHRZEUG, INSBESONDERE ELEKTROROLLER**
STEERING UNIT FOR A VEHICLE AND A VEHICLE, IN PARTICULAR AN ELECTRIC SCOOTER
UNITÉ DE DIRECTION POUR UN VÉHICULE ET VÉHICULE, EN PARTICULIER SCOOTER ÉLECTRIQUE

(30) Priorität: 14.12.2016 DE 102016124286
(43) Veröffentlichungstag der Anmeldung: 23.10.2019
(73) Patentinhaber: UJET S.A., 3364 Leudelange (LU)
(72) Erfinder: NOTMAN, Konstantin, 8070 Bertrange (LU); DAVID, Patrick, 89134 Blaustein (DE); GREHL, Mariana, 89195 Staig (DE)
(74) Vertreter: Meissner Bolte Partnerschaft mbB
(86) Internationale Anmeldenummer: PCT/EP2017/075001
(87) Internationale Veröffentlichungsnummer: WO 2018/108346

(56) Entgegenhaltungen:
- EP-A1- 1 464 570
- CN-Y- 2 706 389
- DE-A1- 4 444 246
- DE-U- 1 859 958
- TW-U- M 343 626

## Beschreibung

Die Erfindung betrifft eine Lenkeinheit für ein Fahrzeug, umfassend zwei Handgriffe und mindestens einen Seitenspiegel mit einem Spiegelgehäuse, das mit einem Haltearm verbunden ist, gemäß Patentanspruch 1. Des Weiteren betrifft die Erfindung ein Fahrzeug, insbesondere einen Elektroroller, gemäß Patentanspruch 8.

Aus dem Stand der Technik sind zusammenklappbare elektrische Motorräder bekannt. Rein exemplarisch wird auf die DE 10 2006 002 912 B4 verwiesen. Entsprechende elektrische Motorroller oder motorisierte Zweiräder haben üblicherweise eine Karosserie und zwei Räder, wobei eines der Räder über einen elektrischen Antrieb angetrieben wird.

DE 18 59 958 U beschreibt Befestigungsvorrichtungen für einen Seitenspiegel eines Fahrrads oder Rollers. Zwischen dem Haltearm und einem Befestigungsteil sind gekrümmte Gleitflächen ausgebildet.

DE 44 44 246 A1 beschreibt einen Rückspiegel für Fahrräder. Der Spiegel ist an einem Ende des Lenkers angebracht. Dieser umfasst eine Haltestange und eine Buchse, die in das offene Ende des Lenkerrohres gesteckt ist. Der Spiegel kann mit Hilfe eines Drehgelenks auf und ab bewegt werden.

EP 1 464 570 A1 und CN 2 706 389 Y beschreiben ebenfalls jeweils eine Rückspiegelbaugruppe für ein Fahrzeug. Die Baugruppen bestehen aus zahlreichen Einzelteilen. CN 2 706 389 Y offenbart eine Lenkeinheit nach dem Oberbegriff des Anspruchs 1.

TW M 343 626 U offenbart eine Verbindung zwischen einer Spiegelkappe und einem Haltearm. Es ist zu erkennen, dass die Spiegelkappe nur um zwei Achsen gegenüber dem Haltearm schwenkbar ist.

JP 2003 072610 A zeigt eine weitere Möglichkeit hinsichtlich einer Lenkeinheit mit Seitenspiegeln. Um die Spiegel nach innen zu bewegen, sind die Griffe vollständig von der Lenkeinheit abzukoppeln.

Ferner ist es bekannt, dass Motorroller üblicherweise eine Lenkeinheit, umfassend einen Lenker mit einer Basis sowie einer Anzeigeeinheit zur Darstellung von Geschwindigkeitsinformationen aufweisen. Darüber hinaus sind an dem Lenker zwei Handgriffe angebracht, über die der Fahrer das Fahrzeug steuern kann.

Ferner sind Motorroller bekannt, die für einen einfachen Transport oder zur Lagerung zusammengefaltet werden können. Dabei sind ein geringes Packmaß des gefalteten Motorrollers und eine kompakte Form wichtig. So erschweren überstehende Bauteile den Umgang mit dem gefalteten Motorroller.

Aus sicherheitstechnischen Gründen ist es notwendig, dass ein Motorroller mit mindestens einem Seitenspiegel ausgestattet ist. Ein derartiger Seitenspiegel ist insbesondere bei einer gewünschten Zusammenfaltung des Motorrollers schwierig handzuhaben. Üblicherweise sind Seitenspiegel über ein Kugelgelenk mit dem Lenker am Haltearm verbunden. Ein derartiges Kugelgelenk weist allerdings den Nachteil auf, dass bei einer Fahrt über unbefestigten bzw. holprigen Boden, eine Lockerung bzw. Positionsänderung des Seitenspiegels auftreten kann.

Ausgehend von diesem Stand der Technik ist es Aufgabe der vorliegenden Erfindung, eine Lenkeinheit für ein Fahrzeug bereitzustellen, der bzw. das dazu beiträgt, beim Zusammenfalten des Motorrollers ein geringes Packmaß zu erzielen und den erwähnten Nachteil hinsichtlich der Lockerung bzw. Positionsänderung des Seitenspiegels zu überwinden.

Erfindungsgemäß wird diese Aufgabe durch die Gegenstände der Patentansprüche 1 und 8 gelöst.

Vorteilhafte und zweckmäßige Ausgestaltungen der erfindungsgemäßen Lenkeinheit sind in den Unteransprüchen angegeben.

Erfindungsgemäß wird die Aufgabe durch eine Lenkeinheit für ein Fahrzeug gelöst, wobei die Lenkeinheit zwei Handgriffe und mindestens einen Seitenspiegel mit einem Spiegelgehäuse umfasst, wobei das Spiegelgehäuse mit einem Haltearm verbunden ist. Vorzugsweise ist der Seitenspiegel in Relation zum Spiegelgehäuse nicht verstellbar. Das Spiegelgehäuse dient zum Schutz des Seitenspiegels.

Erfindungsgemäß ist der Haltearm an einem der beiden Handgriffe derart drehbeweglich befestigt, dass der Seitenspiegel von einer eingeklappten, unterhalb der horizontalen Längsachse des Handgriffes befindlichen ersten Position in eine ausgeklappte, oberhalb der horizontalen Längsachse des Handgriffes befindliche zweite Position schwenkbar und/oder klappbar ist.

Die Längsachse des Handgriffes ist im Wesentlichen quer zur Fahrzeuglängsachse, d.h. quer zur Fahrtrichtung eines Fahrzeugs, ausgebildet.

Es ist möglich, dass beide Handgriffe eine gemeinsame horizontale Längsachse aufweisen. In einer weiteren Ausführungsform der Erfindung ist es möglich, dass der Handgriff eine separate horizontale Längsachse aufweist. Erfindungsgemäß ist es möglich, dass der Seitenspiegel von einer unteren Position in eine obere Position geklappt bzw. geschwenkt werden kann. Eine untere Position ist eine derartige Position, die in vertikaler Richtung unterhalb der horizontalen Längsachse des Handgriffs ausgebildet ist. Eine obere Position ist eine derartige Position die oberhalb der horizontalen Längsachse des Handgriffs ausgebildet ist.

Des Weiteren ist es möglich, dass die eingeklappte, unterhalb der horizontalen Längsachse des Handgriffes befindliche erste Position eine in Relation zur Längsachse des Fahrzeuges geringer beabstandete bzw. nähere Position darstellt. Mit anderen Worten befindet sich der Seitenspiegel in der eingeklappten, unterhalb der horizontalen Längsachse des Handgriffes befindlichen ersten Position näher an der Längsachse des Fahrzeuges als in der zweiten Position. Mit anderen Worten kann der Seitenspiegel aufgrund des am Handgriff befestigten Haltearms von einer platzsparenden eingeklappten Position in eine ausgeklappte Position mit größerem Platzbedarf geschwenkt bzw. geklappt werden.

Das Spiegelgehäuse ist am Haltearm vorzugsweise derart angeordnet bzw. befestigt, dass der Seitenspiegel sowohl in der ersten Position als auch in der zweiten Position entgegen der Fahrtrichtung ausgerichtet ist. Somit ist der Seitenspiegel sowohl im eingeklappten Zustand als auch im ausgeklappten Zustand benutzbar.

Der Haltearm ist vorzugsweise gebogen und/oder gewinkelt ausgebildet. Dies ermöglicht eine besonders platzsparende eingeklappte Position des Seitenspiegels.

Der Haltearm ist um eine erste Schwenkachse schwenkbar und/oder klappbar. Die erste Schwenkachse ist (im Wesentlichen) senkrecht zur horizontalen Längsachse des Handgriffes ausgebildet. Insbesondere ist die erste Schwenkachse in etwa parallel zur Längsachse des Fahrzeugs ausgebildet. Bei einer geraden Fahrt, d.h. bei einem Einschlagwinkel von 0° der Lenkeinheit, ist die erste Schwenkachse im Wesentlichen parallel zur Längsachse des Fahrzeugs, insbesondere parallel zur Fahrtrichtung, ausgebildet.

In einem nicht beanspruchten Beispiel ist der Haltearm mittels eines Drehgelenks drehbeweglich an dem Handgriff befestigt, wobei das Drehgelenk zwei relativ zueinander gegen eine Reibkraft drehbare Halbschalen umfasst. Die Halbschalen sind jeweils in einem ersten und zweiten Gehäuseteil des Drehgelenks angeordnet. Aufgrund der Drehung der Halbschalen können auch die Gehäuseteile gegeneinander verdreht werden. Insbesondere kann mittels der Drehung der Halbschalen der Haltearm in verschiedene Positionen gebracht werden. Beiden Halbschalen ist jeweils eine Kontaktfläche zugeordnet, wobei die jeweiligen Kontaktflächen in einer Reibverbindung zueinander stehen können. Zur Drehung der Halbschalen gegeneinander, bzw. zur Veränderung der relativen Position der Halbschalen zueinander, wird eine Reibkraft aufgebracht. Die Verwendung der Halbschalen hat den Vorteil, dass das Drehgelenk konstruktiv einfach umsetzbar ist und gleichzeitig eine zuverlässige Verschwenkung des Haltearms ermöglicht.

Beispielsweise weisen die Halbschalen zumindest teilweise jeweils eine paraboloide oder eine hyperbolisch-paraboloide Form auf. Eine der Halbschalen kann aber auch abschnittsweise keilförmig oder trapezförmig oder trapezoid sein. Wobei die andere Halbschale vorzugsweise teilweise komplementär zueinander ausgebildet ist.

Beispielsweise sind die Halbschalen derart ausgebildet, dass sie in wenigstens zwei verschiedene Positionen formschlüssig fixierbar sind. Hierzu können die Kontaktflächen der Halbschalen eine jeweils komplementäre Konturierung zueinander aufweisen. Beispielhaft können die Kontaktflächen wenigstens zwei komplementäre Anschlagbereiche aufweisen, sodass bei einer Drehung der Halbschalen diese in verschiedenen Positionen fixiert werden können. In diesen Positionen kann ein Formschluss zwischen den beiden Halbschalen bestehen. Mit anderen Worten greifen die Halbschalen an den Anschlagbereichen ineinander. Ferner wird mittels der Anschlagbereiche beispielhaft der Drehwinkel zwischen den Halbschalen definiert. Insbesondere kann mittels der Anschlagbereiche und Drehung der Halbschalen die Überführung des Haltearms von einer eingeklappten in eine ausgeklappte Position realisiert werden. Vorteilhafterweise kann der Haltearm mittels des Drehgelenks um eine Drehung um 180° verstellt werden. Der Haltearm kann somit von einer Position oberhalb der horizontalen Längsachse des Handgriffes um 180° in eine Position unterhalb der horizontalen Längsachse verschwenkt werden. Die Drehung bzw. Verschwenkung des Haltearms kann beispielsweise mittels einer manuellen Betätigung erfolgen.

Beispielsweise sind die Halbschalen mittels eines Befestigungselementes, insbesondere einer Schraube, und einer vorgespannten Feder zur Einstellung einer Verspannkraft verbindbar oder verbunden. Vorzugsweise ist das Befestigungselement als Schraube ausgebildet. Ein erstes Gehäuseteil des Drehgelenks, in welchem eine erste Halbschale angeordnet ist, kann hierbei ein Gewinde zur Verschraubung mit dem zweiten Gehäuseteil aufweisen, in welchem die zweite Halbschale angeordnet ist. Um in der Schraubverbindung zwischen den Halbschalen eine zusätzliche Vorspannung zu erzeugen, kann an dem Befestigungselement, insbesondere an der Schraube, eine Feder abgestützt und/oder angeordnet sein, die beim Anziehen des Befestigungselementes vorgespannt wird. Mit anderen Worten wird bei der Verbindung der beiden Halbschalen mittels des Befestigungselementes eine Vorspannung über die Feder erzeugt. Den Halbschalen ist somit eine in Wirkverbindung stehende Feder zugeordnet, wodurch eine Zugkraft von der einen Halbschale auf die andere Halbschale erzeugt wird. Mittels der Feder und der Schraubverbindung können die Halbschalen gegeneinander gedrückt werden. Die Feder kann dabei rechtsseitig oder linksseitig der beiden Halbschalen angeordnet sein, um die Zugkraft bzw. Verspannkraft aufzubringen.

Die Federkonstante der Feder kann dabei derart eingestellt sein, dass ein ausreichender Anpressdruck, bzw. eine Zugkraft zwischen den beiden Halbschalen erzeugt wird, sodass die Halbschalen gegeneinander in einer fixierten Position gehalten werden können. Gleichzeitig kann die Federkonstante derart eingestellt sein, dass mittels einer manuellen Betätigung des Haltearms, die Halbschalen gegeneinander verdreht werden können und der Haltearm beispielhaft von einer eingeklappten in eine ausgeklappte Position gebracht werden kann.

Beispielsweise ist an dem Befestigungselement wenigstens eine Gleitscheibe, insbesondere aus einem Metall, angeordnet. Dabei kann die Gleitscheibe beispielhaft zwischen einem Schraubkopf der Schraube und dem Gewinde in dem zugehörigen Gehäuseteil angeordnet sein. Die Feder kann dabei vorteilhafterweise an der Gleitscheibe anliegen.

Beispielsweise sind die Halbschalen aus einem Kunststoff gebildet. Erfindungsgemäß ist der Haltearm mittels eines Scharniergelenks drehbeweglich an dem Handgriff befestigt. Ein Scharnierstift definiert die erste Schwenkachse. Mit anderen Worten wird der Haltearm um die erste Schwenkachse rotiert. Der Haltearm kann um den Scharnierstift des Scharniergelenks geschwenkt werden. Am Haltearm ist diesbezüglich eine entsprechende Buchse ausgebildet, durch die der Scharnierstift geführt ist.

Erfindungsgemäß umfasst das Scharniergelenk einen Rastmechanismus mit einem Entriegelungselement, insbesondere einem Entriegelungsknopf, durch dessen Betätigung der Scharnierstift entgegen einer Vorspannkraft, insbesondere entgegen einer Federkraft, in axialer Richtung bewegbar ist. Vorzugsweise ist in einem Gehäuseelement des Scharniergelenks eine Feder befindlich.

Der Scharnierstift ist derart zur Feder gelagert, dass diese Feder im verriegelten Zustand des Scharniergelenks auf den Scharnierstift eine Vorspannkraft ausübt. Durch Betätigen des Entriegelungselements, insbesondere des Entriegelungsknopfes, wird der Scharnierstift in Richtung der Feder gedrückt. Nach dem Loslassen des Entriegelungselements, insbesondere des Entriegelungsknopfes gelangt der Scharnierstift wieder in seine ursprüngliche, nämlich die verrastete Position, da die Feder dann wieder alleine auf den Scharnierstift drückt. Beim Entriegeln des Scharniergelenks muss demnach auf das Entriegelungselement, insbesondere den Entriegelungsknopf eine Kraft aufgebracht werden, die größer als die Vorspannkraft, insbesondere die Federkraft, ist.

Das Entriegelungselement, insbesondere der Entriegelungsknopf, kann insbesondere als axialer Endabschnitt des Scharnierstifts ausgebildet sein. Bei diesem axialen Endabschnitt handelt es sich um einen von einem Vorspannelement, insbesondere der Feder, weg weisenden axialen Endabschnitt. Der weitere axiale Endabschnitt liegt hingegen an dem Vorspannelement, insbesondere an der Feder, an.

Es ist möglich, dass am Scharnierstift ein Verriegelungszapfen ausgebildet ist, der durch Betätigung des Entriegelungselements in axialer Richtung bewegbar ist. Insbesondere weist das Scharniergelenk-Gehäuse eine Aussparung auf, in die der Verriegelungszapfen bei Betätigung des Entriegelungselements eingeführt wird. Der Verriegelungszapfen blockiert den Buchsenabschnitt des Haltearms bei der Bewegung um den Scharnierstift. Sofern der Verriegelungszapfen in der Ausnehmung des Scharniergelenk-Gehäuses eingeführt ist, kann die Buchse des Haltearms um den Scharnierstift gedreht werden.

Der Verriegelungszapfen, der an dem Scharnierstift des Scharniergelenks ausgebildet ist, kann als Überlast-Schutzvorrichtung ausgebildet sein. Das Scharniergelenk dient zur drehbeweglichen Befestigung bzw. Verbindung des Haltearms am Handgriff der Lenkeinheit. Im ausgeklappten Zustand des Haltearms mit dem daran befestigten Seitenspiegel ist es möglich, dass im verrasteten bzw. verriegelten Zustand des Scharniergelenks auf den Seitenspiegel bzw. auf den Haltearm derartige Kräfte einwirken, die ein Abbrechen des Haltearms bzw. des Seitenspiegels bewirken könnten.

Demnach ist es vorgesehen, dass die Buchse bzw. Scharnierbuchse des Haltearms bei Überschreiten einer entsprechenden Last um den Scharnierstift gedreht werden kann. Mit anderen Worten ist der Verriegelungszapfen derart ausgebildet, dass bei Einwirken einer Überlast der Verriegelungszapfen automatisch in die Ausnehmung eines Gehäuses gleitet, so dass keine Verriegelung des Scharnierstiftes vorliegt. Des Weiteren ist es möglich, dass die Buchse des Haltearms bei einer Überlast-Situation über den Verriegelungszapfen springt, so dass eine Drehbewegung des Haltearms mit dem daran befestigten Seitenspiegel nach unten in Richtung der ersten eingeklappten Position ermöglicht wird.

Das Scharniergelenk umfasst insbesondere ein gabelartiges Gehäuse, in das eine Scharnierbuchse des Haltearms eingreift. Der Scharnierstift ist in der Scharnierbuchse geführt.

In einer besonders bevorzugten Ausführungsform ist das Spiegelgehäuse in Relation zum Haltearm um lediglich zwei Achsen, vorzugsweise um eine vertikale Schwenkachse und um eine horizontale Quer-Schwenkachse, schwenkbar ausgebildet.

Vorzugsweise ist die Lenkeinheit, insbesondere das Spiegelgehäuse, derart ausgebildet, dass die Bewegung um lediglich zwei Achsen sowohl im eingeklappten als auch im ausgeklappten Zustand bzw. in der eingeklappten Position und in der ausgeklappten Position möglich ist.

Als vertikale Schwenkachse ist dabei eine Achse zu verstehen, die (im Wesentlichen) senkrecht zur Auflagefläche des Fahrzeugs ausgebildet ist. Die vertikale Schwenkachse verläuft dabei (im Wesentlichen) senkrecht zur Längsachse des Fahrzeugs sowie senkrecht zur horizontalen Längsachse des Handgriffes. Bei der horizontalen Quer-Schwenkachse handelt es sich um eine (im Wesentlichen) parallel zur horizontalen Längsachse des Handgriffes ausgebildete Achse. Als Quer-Schwenkachse ist bei einer geraden Stellung der Lenkeinheit eine quer zur Fahrtrichtung ausgebildete Achse zu verstehen.

Insbesondere ist das Spiegelgehäuse am Haltearm nicht mittels eines Kugelgelenkes angebracht. Bei Fahrten über unebene Bodenflächen wird somit vermieden, dass das Spiegelgehäuse in Relation zum Haltearm ungewollt in der Position geändert wird. Die beschriebenen Achsen können auch minimal von der beschriebenen senkrechten und/oder parallelen Ausrichtung abweichen.

Vorzugsweise ist das Spiegelgehäuse durch ein (im Wesentlichen) winkelprofil-förmiges Verbindungselement mit dem Haltearm verbunden. Das Verbindungselement umfasst ein Horizontal-Element und ein Vertikal-Element, wobei am Horizontal-Element und am Vertikal-Element jeweils ein (im Wesentlichen) senkrecht zu dem jeweiligen Element ausgebildeter Verbindungsabschnitt ausgebildet ist.

Der Verbindungsabschnitt kann jeweils als Verbindungsstift und/oder Verbindungsbuchse ausgebildet sein. Das Horizontal-Element ist vorzugsweise sowohl in eingeklappter als auch in ausgeklappter Position des Seitenspiegels parallel zur Auflagefläche, auf dem das Fahrzeug befindlich ist, ausgebildet. Das Vertikal-Element ist insbesondere senkrecht zum Horizontal-Element ausgebildet und ist ebenfalls sowohl in der eingeklappten Position als auch in der ausgeklappten Position des Seitenspiegels vertikal ausgerichtet.

Sowohl am Vertikal-Element als auch am Horizontal-Element ist jeweils ein Verbindungsabschnitt ausgebildet, wobei am Horizontal-Element der Verbindungsabschnitt insbesondere auf der Innenseite des Horizontal-Elements ausgebildet ist. Als Innenseite des Horizontal-Elements ist die Seite zu verstehen, die mit dem Vertikal-Element einen im Wesentlichen 90°-Winkel einschließt.

Am Vertikal-Element ist der Verbindungsabschnitt insbesondere auf der Außenseite des Vertikal-Elements ausgebildet. Die Außenseite des Vertikal-Elements schließt mit dem Horizontal-Element insbesondere einen 270°-Winkel ein. Der Haltearm weist am zum Spiegelgehäuse weisenden Ende vorzugsweise eine ebene Auflagefläche auf. In dieser ebenen Auflagefläche ist das Gegenelement des Verbindungsabschnittes des Horizontal-Elements des Verbindungselements ausgebildet. Dabei kann es sich insbesondere um eine Öffnung handeln, in die ein Verbindungsstift des Horizontal-Elements eingeführt werden kann.

Die Verbindungsabschnitte, insbesondere der Verbindungsstift und/oder die Verbindungsbuchse, definieren die vertikale Schwenkachse und die horizontale Quer-Schwenkachse.

Ein weiteres unbeanspruchtes Beispiel betrifft eine Lenkeinheit für ein Fahrzeug, umfassend zwei Handgriffe und mindestens einen Seitenspiegel mit einem Spiegelgehäuse, das mit einem Haltearm verbunden ist. Das Spiegelgehäuse ist erfindungsgemäß in Relation zum Haltearm um lediglich zwei Achsen, vorzugsweise um eine vertikale Schwenkachse und um eine horizontale Quer-Schwenkachse, bewegbar bzw. schwenkbar.

Es ergeben sich ähnliche Vorteile, wie diese bereits im Zusammenhang mit der Lenkeinheit gemäß erstem Ausführungsbeispiel beschrieben wurden. Aufgrund der Beschränkung der Schwenkbarkeit bzw. Bewegbarkeit des Spiegelgehäuses in Relation zum Haltearm um lediglich zwei Achsen, wird ein ungewolltes Verschwenken bzw. Bewegen des Spiegelgehäuses, wie dies bei der Ausbildung mit Kugelgelenken bekannt ist, unterbunden.

Das Spiegelgehäuse kann durch ein im Wesentlichen winkelprofil-förmiges Verbindungselement mit dem Haltearm verbunden sein, wobei das Verbindungselement ein Horizontal-Element und ein Vertikal-Element umfasst. Am Horizontal-Element und am Vertikal-Element ist jeweils ein (im Wesentlichen) senkrecht zu dem jeweiligen Element ausgebildeter Verbindungsabschnitt ausgebildet, wobei die Verbindungsabschnitte die vertikale Schwenkachse und die horizontale Quer-Schwenkachse definieren.

Es ist möglich, dass einer der beiden Verbindungsabschnitte als Verbindungsstift und der weitere Verbindungsabschnitt als Verbindungsbuchse ausgebildet ist.

Der Haltearm kann an dem zum Spiegelgehäuse weisenden Ende eine Auflagefläche bzw. einen Auflageabschnitt aufweisen, auf dem das Horizontal-Element angebracht ist bzw. aufliegt.

Die Lenkeinheit ist beispielsweise derart ausgestaltet, dass an jedem Handgriff der Lenkeinheit ein Seitenspiegel mit der zuvor beschriebenen Konstruktion ausgebildet ist. Mit anderen Worten kann an beiden Handgriffen ein Haltearm ausgebildet sein, wobei mit beiden Haltearmen jeweils ein Spiegelgehäuse verbunden ist. Die Lenkeinheit kann folglich zwei Seitenspiegel mit jeweils einem Spiegelgehäuse aufweisen.

Gemäß einem weiteren nebengeordneten Aspekt der Erfindung wird ein Fahrzeug, insbesondere ein Elektroroller, mit einer erfindungsgemäßen Lenkeinheit angegeben.

Es ergeben sich ähnliche Vorteile, wie diese bereits im Zusammenhang mit den erfindungsgemäßen Lenkeinheiten beschrieben sind. Aufgrund der erfindungsgemäßen Ausführungsform der Lenkeinheit ist es möglich, ein Fahrzeug, insbesondere einen Elektroroller, zur Verfügung zu stellen, der besonders einfach und platzsparend zusammenklappbar ist.

Das erfindungsgemäße Fahrzeug, insbesondere der erfindungsgemäße Motorroller, ist vorzugsweise derart ausgestaltet, dass an jedem Handgriff ein Seitenspiegel mit der zuvor beschriebenen Konstruktion ausgebildet ist.

Nachfolgend wird die Erfindung anhand von Ausführungsbeispielen beschrieben, welche anhand von Abbildungen näher erläutert werden.

Hierbei zeigen:
- Fig. 1: einen elektrisch angetriebenen und faltbaren Motorroller in perspektivischer Ansicht mit einer Lenkeinheit und einem Seitenspiegel im eingeklappten Zustand;
- Fig. 2: einen linken Seitenspiegel in ausgeklappter Position mit Blick in Fahrtrichtung;
- Fig. 3a - 3c: verschiedene Darstellungen eines Scharniergelenks zur Verbindung eines Haltearms mit einem Handgriff;
- Fig. 4: eine schematische Darstellung eines Spiegelgehäuses mit Verbindungselement;
- Fig. 5: eine Detailansicht einer Lenkeinheit und zwei Seitenspiegeln im eingeklappten Zustand nach einem unbeanspruchten Beispiel;
- Fig. 6: einen rechten Seitenspiegel in ausgeklappter Position gemäß einem unbeanspruchten Beispiel; und
- Fig. 7: eine Schnittdarstellung eines Drehgelenks zur Verbindung eines Haltearms mit einem Handgriff gemäß einem unbeanspruchten Beispiel.

In der nachfolgenden Beschreibung werden für gleiche und gleichwirkende Teile dieselben Bezugsziffern verwendet.

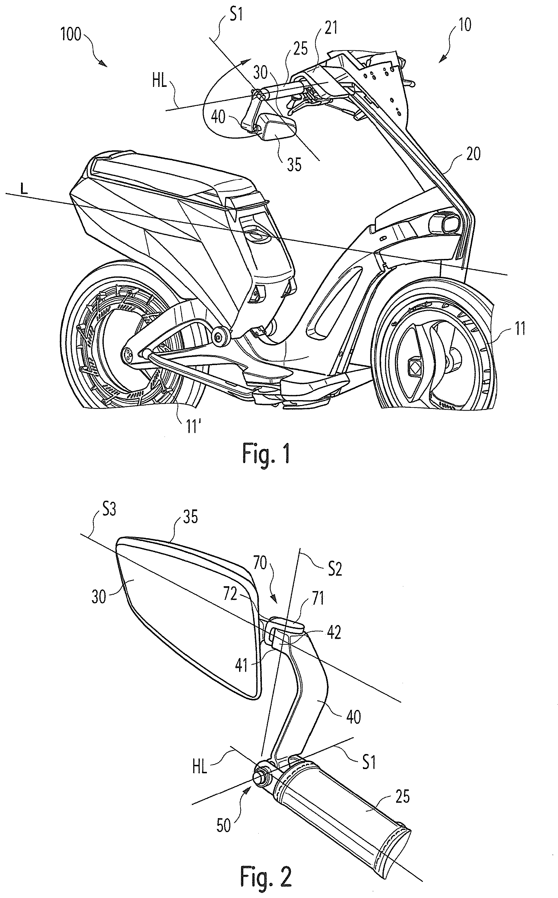

Die Fig. 1 zeigt einen elektrisch angetriebenen Motorroller 100 mit zwei Rädern 11 und 11' und einer Lenkeinheit 10. Der dargestellte Motorroller 100 ist ein faltbarer Motorroller. Der Motorroller 100 umfasst ferner eine Antriebseinheit, die als ein Elektromotor ausgebildet ist. Die Lenkeinheit 10 umfasst eine Lenksäule 20, die um eine Schwenkachse verschwenkt werden kann. Ein Lenker 21 ist fest an der Lenksäule 20 montiert.

Die Lenkeinheit umfasst des Weiteren zwei Handgriffe 25. Über die Handgriffe 25 kann der Fahrer des Motorrollers 100 verschiedene Funktionen des Motorrollers 100 steuern, wie z.B. Hupen, Blinken, Bremsen oder Beschleunigen.

Wie in Fig. 1 zu erkennen ist, umfasst die Lenkeinheit 10 einen Seitenspiegel 30 mit einem Spiegelgehäuse 35, wobei das Spiegelgehäuse 35 mit einem Haltearm 40 verbunden ist. In Fig. 1 befindet sich der Seitenspiegel 30 bzw. das Spiegelgehäuse 35 in einer eingeklappten ersten Position. In der eingeklappten ersten Position befindet sich das Spiegelgehäuse 35 unterhalb der horizontalen Längsachse HL des Handgriffs 25. Die horizontale Längsachse HL des Handgriffs 25 ist quer zur Längsachse L des Rollers 100 ausgebildet. Außerdem befindet sich der Seitenspiegel 30 bzw. das Spiegelgehäuse 35 in der dargestellten ersten Position in einer zur Längsachse L des Motorrollers 100 nahen Position.

Wie durch den gebogenen Pfeil angedeutet ist, kann der Seitenspiegel 30 bzw. das Spiegelgehäuse 35 nach oben geschwenkt bzw. geklappt werden. Der gebogen ausgeführte Haltearm 40 kann diesbezüglich um die erste Schwenkachse S1 geschwenkt werden. Die Schwenkachse S1 ist senkrecht zur horizontalen Längsachse HL des Hangriffs 25 ausgebildet.

In Fig. 2 wird der Spiegel 30 mit dem Spiegelgehäuse 35 in einer ausgeklappten Position dargestellt. In diesem Fall handelt es sich um den aus Fahrersicht zu verstehenden linken Seitenspiegel 30. In der dargestellten zweiten Position ist der Seitenspiegel 30 bzw. das Spiegelgehäuse 35 oberhalb der horizontalen Längsachse HL des Handgriffs 25 befindlich. Außerdem ist der Seitenspiegel 30 aufgrund der gebogenen Form des Haltearms 40 von der Längsachse L des Motorrollers 100 wegbewegt bzw. im Vergleich zur ersten Position (siehe Fig. 1) nach außen geklappt. Hierzu wird der Haltearm 40 mittels des angedeuteten Scharniergelenks 50 um die erste Schwenkachse S1 nach oben bewegt.

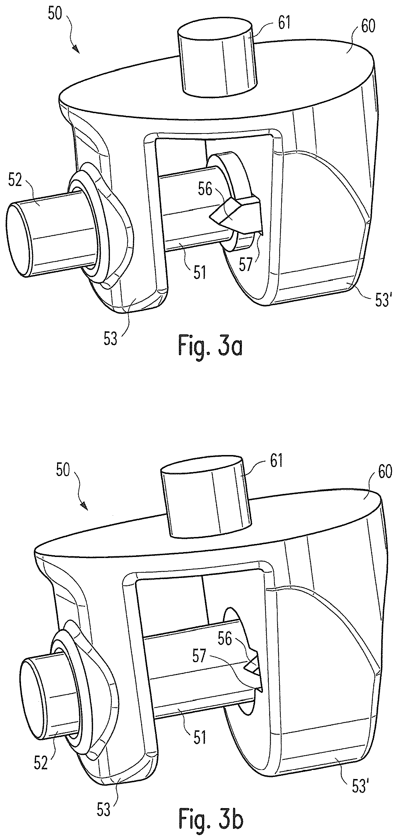

Das Scharniergelenk 50 ist in den Fig. 3a - 3c detaillierter dargestellt. Der dargestellte Scharnierstift 51 definiert die Schwenkachse S1. Des Weiteren ist der Entriegelungsknopf 52 zu erkennen. Um die Funktionsweise des Scharniergelenks 50 besser verdeutlichen zu können, ist die am Haltearm 40 ausgebildete Buchse nicht dargestellt. Diese befindet sich zwischen den beiden Gehäuseabschnitten 53 und 53', wobei der Scharnierstift 51 durch die Buchse geführt wird. Der Entriegelungsknopf 52 ist als axialer Endabschnitt des Scharnierstifts 51 ausgebildet.

In Fig. 3a ist das Scharniergelenk 50 im verriegelten bzw. verrasteten Zustand dargestellt, d.h. dass der Entriegelungsknopf 52 nicht betätigt ist.

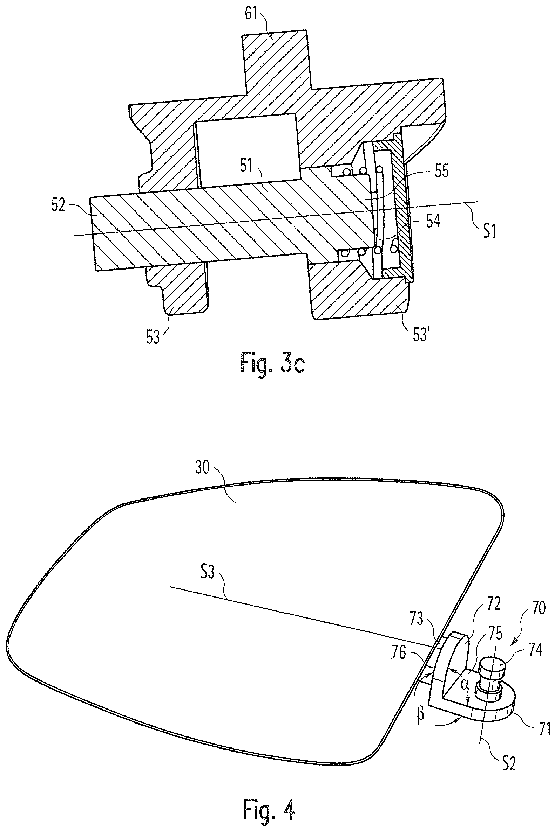

Wie in Fig. 3c zu erkennen ist, ist im rechten Gehäuseabschnitt 53' eine Feder 54 ausgebildet. In die Feder 54 greift der zweite axiale Endabschnitt 55 des Scharnierstiftes 51 ein. Der zweite axiale Endabschnitt 55 ist das zum Entriegelungsknopf 52 gegenüberliegende Ende des Scharnierstifts 51. Im verriegelten bzw. verrasteten Zustand drückt die Feder 54 den zweiten axialen Endabschnitt 55 in Richtung des ersten Gehäuseabschnitts 53. Das heißt, dass durch Betätigung des Entriegelungsknopfes 52 der Scharnierstift 51 entgegen der Federkraft in Richtung des zweiten Gehäuseabschnitts 53' bewegbar ist. Auf den Entriegelungsknopf 52 muss demnach eine Kraft einwirken, die größer ist als die Vorspannkraft der Feder 54.

Wie in Fig. 3a zu erkennen ist, ist am Scharnierstift 51 ein Verriegelungszapfen 56 ausgebildet. Durch Bewegung des Scharnierstifts 51 in Richtung des Gehäuseabschnitts 53' ist demnach auch der Verriegelungszapfen 56 axial bewegbar. Der Verriegelungszapfen 56 ist vorzugsweise monolithisch, d.h. einteilig mit dem Scharnierstift 51 ausgebildet.

Im verriegelten Zustand (Fig. 3a) verhindert der Verriegelungszapfen 56 eine Bewegung der Gelenksbuchse (nicht dargestellt) um den Scharnierstift 51. Eine Schwenkbewegung des Haltearms 40 wird im verriegelten Zustand unterbunden bzw. verhindert.

Sofern der Entriegelungsknopf 52 gedrückt wird, wird der Verriegelungszapfen 56 in Richtung des rechten bzw. zweiten Gehäuseabschnitts 53' bewegt. Hierzu weist der Gehäuseabschnitt 53' eine Ausnehmung 57 auf. Der Verriegelungszapfen 56 kann in die Ausnehmung 57 gleiten. Wie in Fig. 3b dargestellt ist, ist im entriegelten Zustand der Verriegelungszapfen 56 vollständig in dem Gehäuseabschnitt 53', insbesondere in der Ausnehmung 57, befindlich. Somit wird eine Bewegung der Scharnierbuchse um den Scharnierstift 51 ermöglicht. Sofern der Haltearm 40 in einer gewünschten Position befindlich ist, kann durch Loslassen des Entriegelungsknopfes 52 der Verriegelungszapfen 56 in Richtung des linken Gehäuseabschnitts 53 bewegt werden. Somit kann eine Verriegelung des Haltearms 40 erfolgen. Vorzugsweise weist der Haltearm 40 bzw. die zum Haltearm 40 zugehörige Buchse eine entsprechende Ausnehmung auf, in die der Verriegelungszapfen 56 im verriegelten Zustand eingreift.

Das Gehäuse 60 umfasst des Weiteren einen Zapfen 61. Mit Hilfe des Zapfens 61 kann das Scharniergelenk 50 an einem Handgriff 25 befestigt werden. Der dargestellte Verriegelungszapfen 56 ist vorzugsweise im Sinne einer Überlast-Schutzvorrichtung ausgebildet. Das heißt, dass bei Überlast-Situationen, d.h. bei auf den Haltearm 40 großen wirkenden Kräften, der Verriegelungszapfen 56 automatisch in die Ausnehmung 57 gleitet, so dass eine Bewegung des Haltearms 40 ermöglicht wird.

Vorzugsweise kann der Haltearm 40 und der daran befestigte Seitenspiegel 30 von einer zweiten ausgeklappten Position in eine erste eingeklappte Position bei Überlast-Fällen bewegt werden. Somit wird verhindert, dass der Seitenspiegel 30 vom Haltearm 40 abbricht oder der Haltearm 40 zerstört wird. In den Fig. 2 und 4 ist des Weiteren das Verbindungselement 70 zu erkennen, mit dessen Hilfe das Spiegelgehäuse 35 am Haltearm 40 befestigt ist. In Fig. 2 ist das Verbindungselement 70 in der zweiten Position des Spiegels 30 dargestellt.

In Fig. 4 ist das Verbindungselement 70 im eingeklappten, d.h. in der beschriebenen ersten Position dargestellt. Das Verbindungselement 70 ist im Wesentlichen winkelprofil-förmig ausgebildet und umfasst ein Horizontal-Element 71 sowie ein Vertikal-Element 72. In beiden Positionen ist das Horizontal-Element 71 (im Wesentlichen) parallel zur Auflagefläche, auf der der Motorroller 100 steht, ausgebildet. Das Vertikal-Element 72 ist jeweils senkrecht zur Auflagefläche ausgebildet.

Das Horizontal-Element 71 weist einen Verbindungsabschnitt 74 auf. Der Verbindungs-Abschnitt 74 ist auf der Innenseite 75 des Horizontal-Elementes 71 ausgebildet. Der Verbindungs-Abschnitt 74 ist dabei senkrecht zum Horizontal-Element 71 ausgebildet. Als Innenseite 75 des Horizontal-Elementes ist die Seite zu verstehen, die mit dem Vertikal-Element 72 einen 90°-Winkel α begrenzt. Der Verbindungs-Abschnitt 74 ist als Verbindungsstift ausgebildet. Der Verbindungsstift definiert eine zweite vertikale Schwenkachse S2. Die vertikale Schwenkachse S2 ist im Wesentlichen senkrecht zur horizontalen Längsachse HL des Handgriffes 25 ausgebildet. Des Weiteren ist die zweite vertikale Schwenkachse S2 im Wesentlichen senkrecht zur ersten Schwenkachse S1 ausgebildet.

Das Vertikal-Element 72 weist ebenfalls einen Verbindungs-Abschnitt 73 auf. Der Verbindungs-Abschnitt 73 ist auf der Außenseite 76 des Vertikal-Elements 72 ausgebildet. Als Außenseite 76 ist die Seite zu verstehen, die zusammen mit dem Horizontal-Element 71 einen Winkel β von im Wesentlichen 270° einschließt. Der Verbindungs-Abschnitt 73 definiert die dritte Quer-Schwenkachse S3. Das Spiegelgehäuse 35 kann somit sowohl um die zweite vertikale Schwenkachse S2 als auch um die dritte Quer-Schwenkachse S3 bewegt werden. Die dritte Quer-Schwenkachse S3 ist im Wesentlichen senkrecht zur zweiten vertikalen Schenkachse S2 ausgebildet. Die dritte Quer-Schwenkachse S3 ist des Weiteren im Wesentlichen parallel zur horizontalen Längsachse HL des Handgriffs 25 ausgebildet.

Der Verbindungsabschnitt 73 des Vertikal-Elements 72 kann als Verbindungsbuchse ausgebildet sein, in welche ein Verbindungsstift des Spiegelgehäuses 35 eingreifen kann. Da das Spiegelgehäuse 35 in Relation zum Haltearm 40 lediglich um zwei Achsen, nämlich um die zweite vertikale Schwenkachse S2 und die dritte Quer-Schwenkachse S3 gedreht bzw. geschwenkt werden kann, wird ein ungewolltes Verdrehen des Spiegels 30 während der Fahrt vermieden.

Der Haltearm 40 weist am zum Scharniergelenk 50 entgegengesetzten Ende 41 einen Auflageabschnitt 42 auf (siehe Fig. 2). Auf diesen im Wesentlichen eben ausgebildeten Ablageabschnitt 42 liegt das Horizontal-Element 71 auf. Der Auflageabschnitt 42 weist im dargestellten Ausführungsbeispiel eine Öffnung auf (nicht dargestellt) in der der Verbindungs-Abschnitt 74 des Verbindungselements 70 eingreift. Die Lage des Verbindungs-Abschnitts 74 bzw. der Öffnung ist derart zu wählen, dass das Vertikal-Element 72 beim Schwenken des Spiegelgehäuses 35 um die vertikale Schwenkachse S2 am Auflageabschnitt 42 vorbeigleiten kann und nicht blockiert wird.

Der erfindungsgemäße Motorroller 100 ist vorzugsweise derart ausgestaltet, dass an jedem Handgriff 25 ein Seitenspiegel 30 mit der zuvor beschriebenen Konstruktion ausgebildet ist.

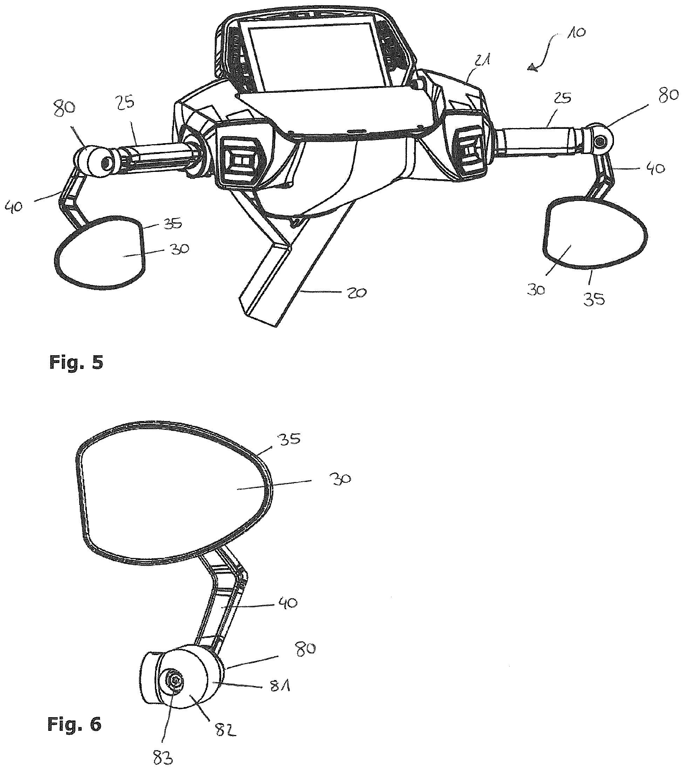

Fig. 5 zeigt eine Detailansicht einer Lenkeinheit 10 und zwei Seitenspiegeln 30 im eingeklappten Zustand nach einem unbeanspruchten Beispiel. Die Lenkeinheit 10 umfasst eine Lenksäule 20, die um eine Schwenkachse verschwenkt werden kann. Ein Lenker 21 ist fest an der Lenksäule 20 montiert. Die Lenkeinheit 10 weist weiterhin zwei Handgriffe 25 auf.

Die Lenkeinheit 10 umfasst zwei Seitenspiegel 30 mit jeweils einem Spiegelgehäuse 35, wobei das Spiegelgehäuse 35 mit einem Haltearm 40 verbunden ist. Die Seitenspiegel 30, bzw. die Spiegelgehäuse 35 befinden sich in einer eingeklappten Position. Dabei befindet sich das jeweilige Spiegelgehäuse 35 unterhalb der horizontalen Längsachse des Handgriffs 25. Die Seitenspiegel 30, bzw. die Spiegelgehäuse 35 können nach oben geschwenkt, bzw. geklappt werden. Dabei kann der gebogen ausgeführte jeweilige Haltearm 40 um eine erste Schwenkachse geschwenkt werden. Hierzu wird der jeweilige Haltearm 40 mittels eines Drehgelenks 80 um die Schwenkachse nach oben bewegt. Beispielhaft kann der jeweilige Haltearm 40 mittels des zugehörigen Drehgelenks 80 um eine Drehung um 180° verstellt werden. Die Drehung bzw. Verschwenkung des Haltearms 40 kann beispielsweise mittels einer manuellen Betätigung erfolgen.

Fig. 6 zeigt einen rechten Seitenspiegel 30 mit einem Spiegelgehäuse 35 einer Lenkeinheit 10 gemäß Fig. 5 in ausgeklappter Position. In der dargestellten Position ist der Seitenspiegel 30 bzw. das Spiegelgehäuse 35 oberhalb der horizontalen Längsachse des Handgriffs angeordnet. Der gebogen ausgeführte Haltearm 40 verbindet den Seitenspiegel 30 bzw. das Spiegelgehäuse 35 mit dem Drehgelenk 80. Der Haltearm 40 ist mittels des Drehgelenks 80 drehbeweglich am Handgriff befestigt. Das Drehgelenk 80 weist zwei relativ zueinander drehbare Gehäuseteile 81, 82 auf. Die Gehäuseteile 81, 82 weisen jeweils eine nicht dargestellte Halbschale auf. Mit anderen Worten ist jeweils eine Halbschale in einem der Gehäuseteile 81, 82 angeordnet. Aufgrund der Drehung der Halbschalen können die Gehäuseteile 81, 82 gegeneinander verdreht werden. Die Gehäuseteile 81, 82 sind beispielhaft mittels einer Schraube 83 und einer nicht dargestellten vorgespannten Feder verbunden. Mittels der Drehung der Gehäuseteile 81, 82 bzw. der Halbschalen kann der Haltearm 40 in verschiedene Positionen, beispielhaft in eine eingeklappte und ausgeklappte Position gebracht werden.

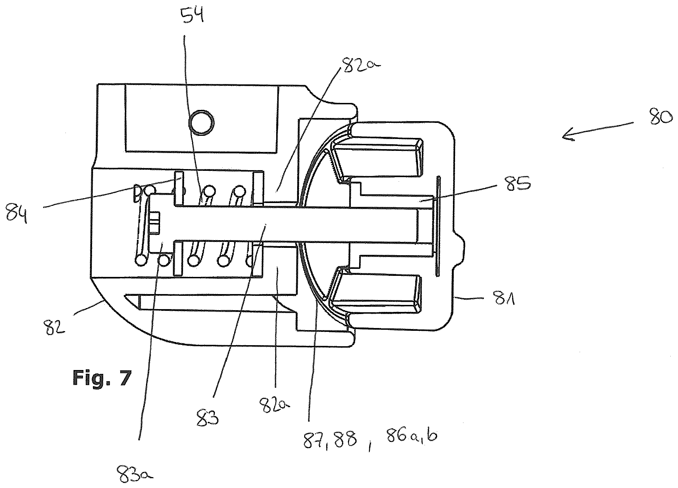

Fig. 7 zeigt eine detaillierte Schnittdarstellung eines Drehgelenks 80 zur Verbindung eines Haltearms 40 mit einem Handgriff. Das Drehgelenk 80 weist ein erstes Gehäuseteil 81 und ein zweites Gehäuseteil 82 auf. Die Gehäuseteile 81, 82 sind miteinander verbunden. Das erste Gehäuseteil 81 weist eine erste Halbschale 87 und das zweite Gehäuseteil 82 eine zweite Halbschale 88 auf.

Beiden Halbschalen 87, 88 ist jeweils eine Kontaktfläche 86 a,b zugeordnet. Die Halbschalen 87, 88 stehen an den Kontaktflächen 86 a,b in Kontakt zueinander und sind miteinander verbunden. Die Kontaktflächen 86 a,b sind beispielhaft gebogen ausgebildet. Vorzugsweise weisen die Halbschalen 87, 88 jeweils eine paraboloide oder eine hyperbolisch-paraboloide Form auf.

Insbesondere stehen die Halbschalen 87, 88 entlang der Kontaktflächen 86 a,b in vollständigem Kontakt zueinander. Weiterhin stehen die Halbschalen 87, 88 an den Kontaktflächen 86 a,b in einer Reibverbindung zueinander. Zur Drehung der Halbschalen 87, 88 gegeneinander, bzw. zur Veränderung der relativen Position der Halbschalen 87, 88 zueinander, wird eine Reibkraft aufgebracht. Mittels der Drehung der Halbschalen 87, 88 können auch das erste Gehäuseteil 81 gegenüber dem zweiten Gehäuseteil 82 und umgekehrt gegeneinander verdreht werden.

Das erste Gehäuseteil 81 weist ein Gewinde 85 für eine Schraubverbindung auf. Das Gewinde 85 ist in Richtung des zweiten Gehäuseteils 82 ausgerichtet, derart, dass eine Schraube 83 über das zweite Gehäuseteil 82 in das Gewinde 85 verschraubt wird. Die Gehäuseteile 81, 82 weisen für die Schraubverbindung eine entsprechende Ausnehmung auf. Die Schraube 83 ist beispielhaft vollständig innerhalb der Gehäuseteile 81, 82 angeordnet. Mit anderen Worten ist ein Schraubkopf 83a der Schraube 83 innerhalb des zweiten Gehäuseteils 82 angeordnet.

In dem zweiten Gehäuseteil 82 ist weiterhin eine Feder 54 angeordnet. Die Feder 54 liegt einseitig an einer Auflage 82a des zweiten Gehäuseteils 82 an. Die Feder 54 ist der Schraube 83 derart zugeordnet, dass sie eine vorgespannte Feder 54 ausbildet. Die Schraube 83 ist daher innerhalb der Feder 54 angeordnet. Mittels der Feder 54 und der Schraube 83 kann somit eine Verspannkraft zwischen den beiden Halbschalen 87, 88 und damit auch zwischen den Gehäuseteilen 81, 82 eingestellt werden. Die Feder 54 wird hierzu beim Anziehen der Schraube 83 vorgespannt.

Mittels der vorgespannten Feder 54 kann anders gesagt eine Zugkraft zwischen den beiden Halbschalen 87, 88 erzeugt werden. Dabei wird die erste Halbschale 87 gegen die zweite Halbschale 88 gedrückt und verspannt. Die Federkonstante der Feder 54 kann dabei derart eingestellt sein, dass ein ausreichender Anpressdruck, bzw. eine Zugkraft zwischen den beiden Halbschalen 87, 88 erzeugt wird, sodass die Halbschalen 87, 88 gegeneinander in einer fixierten Position gehalten werden können. Gleichzeitig kann die Federkonstante derart eingestellt sein, dass mittels einer manuellen Betätigung des Haltearms, die Halbschalen 87, 88 gegeneinander verdreht werden können und der Haltearm beispielhaft von einer eingeklappten in eine ausgeklappte Position gebracht werden kann.

Der Schraube 83 ist eine Gleitscheibe 84 zugeordnet. Dabei ist die Gleitscheibe 84 an der Schraube 83 derart angeordnet, dass die Feder 54 an der Gleitscheibe 84 anliegen kann. Die Gleitscheibe 84 ist dabei zwischen dem Schraubkopf 83 a und der Auflage 82a des zweiten Gehäuseteils 82 angeordnet. Die Gleitscheibe 84 ist aus einem Metall gebildet.

Die Halbschalen 87, 88 sind weiterhin derart ausgebildet, dass sie in wenigstens zwei verschiedene Positionen formschlüssig fixierbar sind. Hierzu können die Kontaktflächen 86 a,b der Halbschalen 87, 88 weitere komplementäre nicht dargestellte Anschlagbereiche aufweisen, sodass bei einer Drehung der Halbschalen 87, 88 diese in verschiedenen Positionen fixiert werden können. In diesen Positionen kann demnach ein Formschluss zwischen den beiden Halbschalen 87, 88 bestehen. Mit anderen Worten greifen die Halbschalen 87, 88 an den Anschlagbereichen ineinander. Somit kann der Haltearm mittels des Drehgelenks 80 um eine Drehung um 180° verstellt werden. Der Haltearm kann demnach von einer Position oberhalb der horizontalen Längsachse des Handgriffes um 180° in eine Position unterhalb der horizontalen Längsachse verschwenkt werden. Die Drehung bzw. Verschwenkung des Haltearms kann beispielsweise mittels einer manuellen Betätigung erfolgen.

### Bezugszeichen

- 10: Lenkeinheit
- 11, 11': Räder
- 20: Lenksäule
- 21: Lenker
- 25: Handgriff
- 30: Seitenspiegel
- 35: Spiegelgehäuse
- 40: Haltearm
- 41: Ende Haltearm
- 42: Auflageabschnitt
- 50: Scharniergelenk
- 51: Scharnierstift
- 52: Entriegelungsknopf
- 53, 53': Gehäuseabschnitt
- 54: Feder
- 55: Zweiter axialer Endabschnitt
- 56: Verriegelungszapfen
- 57: Ausnehmung
- 60: Gehäuse
- 61: Zapfen
- 70: Verbindungselement
- 71: Horizontal-Element
- 72: Vertikal-Element
- 73: Verbindungs-Abschnitt Vertikal-Element
- 74: Verbindungs-Abschnitt Horizontal-Element
- 75: Innenseite
- 76: Außenseite
- 80: Drehgelenk
- 81: erstes Gehäuseteil
- 82: zweites Gehäuseteil
- 82 a: Auflage
- 83: Schraube
- 83 a: Schraubkopf
- 84: Gleitscheibe
- 85: Gewinde
- 86 a,b: Kontaktfläche
- 87: erste Halbschale
- 88: zweite Halbschale
- 100: Motorroller
- HL: Horizontale Längsachse Handgriff
- L: Längsachse Roller
- S1: Erste Schwenkachse
- S2: Zweite vertikale Schwenkachse
- S3: Dritte Quer-Schwenkachse
- α: = 90°-Winkel
- β: = 270°-Winkel

## Patentansprüche

1. Lenkeinheit (10) für ein Fahrzeug, umfassend zwei Handgriffe (25) und mindestens einem Seitenspiegel (30) mit einem Spiegelgehäuse (35), das mit einem Haltearm (40) verbunden ist, wobei
der Haltearm (40) an einem der beiden Handgriffe (25) derart drehbeweglich befestigt ist, dass der Seitenspiegel (30) von einer eingeklappten, unterhalb der horizontalen Längsachse (HL) des Handgriffes (25) befindlichen ersten Position in eine ausgeklappte, oberhalb der horizontalen Längsachse (HL) des Handgriffes (25) befindliche zweite Position schwenkbar und/oder klappbar ist, wobei der Haltearm (40) um eine erste Schwenkachse (S1), die im Wesentlichen senkrecht zur horizontalen Längsachse (HL) des Handgriffes (25) ausgebildet ist, schwenkbar und/oder klappbar ist, wobei der Haltearm (40) mittels eines Scharniergelenks (50) drehbeweglich an dem Handgriff (25) befestigt ist, wobei ein Scharnierstift (51) die erste Schwenkachse (S1) definiert,
**dadurch gekennzeichne**t, dass
das Scharniergelenk (50) einen Rastmechanismus mit einem Entriegelungselement, insbesondere einem Entriegelungsknopf (52) umfasst, durch dessen Betätigung der Scharnierstift (51) entgegen einer Vorspannkraft, insbesondere entgegen einer Federkraft, in axialer Richtung bewegbar ist.

2. Lenkeinheit (10) nach Anspruch 1,
**dadurch gekennzeichne**t, dass
das Entriegelungselement (52) als axialer Endabschnitt des Scharnierstifts (51) ausgebildet ist.

3. Lenkeinheit (10) nach Anspruch 1 oder 2,
**dadurch gekennzeichne**t, dass
am Scharnierstift (51) ein Verriegelungszapfen (56) ausgebildet ist, der durch Betätigung des Entriegelungselements (52) in axialer Richtung bewegbar ist.

4. Lenkeinheit (10) nach Anspruch 3,
**dadurch gekennzeichne**t, dass
der Verriegelungszapfen (56), der an dem Scharnierstift (51) des Scharniergelenks (50) des Haltearms (40) ausgebildet ist, als Überlastschutzvorrichtung ausgebildet ist.

5. Lenkeinheit (10) nach einem der vorangegangenen Ansprüche,
**dadurch gekennzeichne**t, dass
das Spiegelgehäuse (35) in Relation zum Haltearm (40) um lediglich zwei Achsen, vorzugsweise um eine vertikale Schwenkachse (S2) und um eine horizontale Quer-Schwenkachse (S3), schwenkbar ist.

6. Lenkeinheit (10) nach Anspruch 5,
**dadurch gekennzeichne**t, dass
das Spiegelgehäuse (35) durch ein im Wesentlichen winkelprofil-förmiges Verbindungselement (70) mit dem Haltearm (40) verbunden ist, wobei das Verbindungselement (70) ein Horizontal-Element (71) und ein Vertikal-Element (72) umfasst, wobei am Horizontal-Element (71) und am Vertikal-Element (72) jeweils ein im Wesentlichen senkrecht zu dem jeweiligen Element (71, 72) ausgebildeter Verbindungsabschnitt (73, 74), insbesondere ein Verbindungsstift oder eine Verbindungsbuchse, ausgebildet ist.

7. Lenkeinheit (10) nach Anspruch 6,
**dadurch gekennzeichne**t, dass
die Verbindungsabschnitte (73, 74) die vertikale Schwenkachse (S2) und die horizontale Quer-Schwenkachse (S3) definieren.

8. Fahrzeug, insbesondere Elektroroller (100), mit einer Lenkeinheit (10) nach einem der Ansprüche 1 bis 7.

## Claims

1. Steering unit (10) for a vehicle, comprising two handles (25) and at least one side mirror (30) having a mirror housing (35) which is connected to a supporting arm (40), wherein the supporting arm (40) is fixed in a rotatably movable manner to one of the two handles (25) in such a way that the side mirror (30) can be pivoted and/or folded from a folded-in first position located below the horizontal longitudinal axis (HL) of the handle (25) into a folded-out second position located above the horizontal longitudinal axis (HL) of the handle (25), wherein the supporting arm (40) can be pivoted and/or folded about a first pivot axis (S1) which is formed substantially perpendicular to the horizontal longitudinal axis (HL) of the handle (25), wherein the supporting arm (40) is attached in a rotatably movable manner to the handle (25) by means of a hinge joint (50), wherein a hinge pin (51) defines the first pivot axis (S1), **characterized in in that** the hinge joint (50) comprises a latching mechanism with an unlocking element, in particular an unlocking knob (52), by the actuation of which the hinge pin (51) can be moved in the axial direction against a pretensioning force, in particular against a spring force.

2. Steering unit (10) according to claim 1, **characterized in that** the unlocking element (52) is formed as an axial end section of the hinge pin (51).

3. Steering unit (10) according to claim 1 or 2, **characterized in that** a locking pin (56) is formed on the hinge pin (51), which is movable in the axial direction by actuating the unlocking element (52).

4. Steering unit (10) according to claim 3, **characterized in that** the locking pin (56) formed on the hinge pin (51) of the hinge joint (50) of the supporting arm (40) is designed as an overload protection device.

5. Steering unit (10) according to one of the preceding claims, **characterized in that** the mirror housing (35) is pivotable in relation to the supporting arm (40) about only two axes, preferably about a vertical pivot axis (S2) and about a horizontal transverse pivot axis (S3).

6. Steering unit (10) according to claim 5, **characterized in that** the mirror housing (35) is connected to the supporting arm (40) by a substantially angle-profile-shaped connecting element (70), wherein the connecting element (70) comprises a horizontal element (71) and a vertical element (72), wherein a connecting section (73, 74), in particular a connecting pin or a connecting bushing, which is designed substantially perpendicular to the respective element (71, 72), is formed in each case on the horizontal element (71) and on the vertical element (72).

7. Steering unit (10) according to claim 6, **characterized in that** the connecting sections (73, 74) define the vertical pivot axis (S2) and the horizontal transverse pivot axis (S3).

8. Vehicle, in particular electric scooter (100), having a steering unit (10) according to one of claims 1 to 7.

## Revendications

1. Unité de direction (10) pour un véhicule, comprenant deux poignées (25) et au moins un rétroviseur latéral (30) avec un boîtier de rétroviseur (35) qui est relié à un bras de retenue (40), sachant que le bras de retenue (40) est fixé à une des deux poignées (25) de façon mobile en rotation de manière que le rétroviseur latéral (30) puisse pivoter et/ou basculer d'une première position repliée située au-dessous de l'axe longitudinal horizontal (HL) de la poignée (25) à une deuxième position dépliée située au-dessus de l'axe longitudinal horizontal (HL) de la poignée (25), sachant que le bras de retenue (40) peut pivoter et/ou basculer autour d'un premier axe de pivotement (S1) qui est constitué de manière sensiblement perpendiculaire à l'axe longitudinal horizontal (HL) de la poignée (25), sachant que le bras de retenue (40) est fixé à la poignée (25) de façon mobile en rotation moyennant une articulation à charnière (50), sachant qu'une broche de charnière (51) définit le premier axe de pivotement (S1),
**caractérisée en ce que**
l'articulation à charnière (50) comprend un mécanisme d'encliquetage avec un élément de déverrouillage, en particulier un bouton de déverrouillage (52), par l'actionnement duquel la broche de charnière (51) est déplaçable en direction axiale contre une force de précontrainte, en particulier contre une force de ressort.

2. Unité de direction (10) selon la revendication 1,
**caractérisée en ce que**
l'élément de déverrouillage (52) est constitué comme section d'extrémité axiale de la broche de charnière (51).

3. Unité de direction (10) selon la revendication 1 ou 2,
**caractérisée en ce que**
un tourillon de verrouillage (56) qui est déplaçable en direction axiale par actionnement de l'élément de déverrouillage (52) est constitué au niveau de la broche de charnière (51).

4. Unité de direction (10) selon la revendication 3,
**caractérisée en ce que**
le tourillon de verrouillage (56) qui est constitué au niveau de la broche de charnière (51) de l'articulation à charnière (50) du bras de retenue (40) est constitué comme dispositif de protection contre les surcharges.

5. Unité de direction (10) selon l'une des revendications précédentes,
**caractérisée en ce que**
le boîtier de rétroviseur (35) est pivotable par rapport au bras de retenue (40) autour de seulement deux axes, de préférence autour d'un axe de pivotement vertical (S2) et autour d'un axe de pivotement transversal horizontal (S3).

6. Unité de direction (10) selon la revendication 5,
**caractérisée en ce que**
le boîtier de rétroviseur (35) est relié au bras de retenue (40) par un élément de liaison (70) ayant sensiblement une forme de profilé d'équerre, sachant que l'élément de liaison (70) comprend un élément horizontal (71) et un élément vertical (72), sachant que respectivement une section de liaison (73, 74) constituée de manière sensiblement perpendiculaire à l'élément (71, 72) respectif, en particulier une broche de liaison ou une douille de liaison, est constitué au niveau de l'élément horizontal (71) et de l'élément vertical (72).

7. Unité de direction (10) selon la revendication 6,
**caractérisée en ce que**
les sections de liaison (73, 74) définissent l'axe de pivotement vertical (S2) et l'axe de pivotement transversal horizontal (S3).

8. Véhicule, en particulier scooter électrique (100), pourvu d'une unité de direction (10) selon l'une des revendications 1 à 7.
